# EUROPÄISCHE PATENTSCHRIFT

(11) **EP 4 173 476 B1**
(45) Veröffentlichungstag und Bekanntmachung des Hinweises auf die Patenterteilung: **06.12.2023**
(21) Anmeldenummer: 21204965.4
(22) Anmeldetag: 27.10.2021
(51) Int. Cl.: A01G 9/28

(54) **HOCHBEET MIT SEITENWÄNDEN UND QUERSTREBEN**
RAISED BED WITH SIDE WALLS AND CROSS STRUTS
LIT SURÉLEVÉ POURVU DE PAROIS LATÉRALES ET DE TRAVERSES

(43) Veröffentlichungstag der Anmeldung: 03.05.2023
(73) Patentinhaber: Steland Apparatebau GmbH & Co. KG, 41569 Rommerskirchen (DE)
(72) Erfinder: STELAND, Jörg, 50259 Pulheim (DE)
(74) Vertreter: Michalski Hüttermann & Partner Patentanwälte mbB

(56) Entgegenhaltungen:
- EP-A1- 1 459 622
- EP-A1- 2 976 938
- DE-A1- 4 001 089
- DE-U1-202009 009 792
- DE-U1-202019 106 290

## Beschreibung

Die Erfindung betrifft ein Hochbeet aufweisend zumindest eine sich in einer Hochrichtung und einer Längsrichtung erstreckende Seitenwand, mehrere sich in einer Querrichtung erstreckende Querstreben zum Beispiel zur Auflage von Einlegeböden und zumindest ein auf einem Querstrebenpaar aufliegenden Einlegeboden.

Aus DE 202 05 252 U1 ist eine Hochbeet mit Eckpfeilern bekannt, das auch zur Kompostierung geeignet ist und bei dem die Eckpfeiler T-Nuten und Seitenwände an Längsenden entsprechende Federn zum Eingriff in die T-Nuten aufweisen. Weiterhin sind bei dem Hochbeet Halterungen für Aussteifungen und Pflanzbodengitter vorgesehen, die Quer zu den Seitenwänden verlaufen.

Aus DE 20 2009 010 705 U1 ist ein Hochbeet aus Wandsegmenten bekannt, wobei die Wandsegmente abgewinkelte Verbindungsbereiche für die Verbindung mit Verbindungsbereichen weiterer Wandsegmente oder einer sonstigen Wand aufweist. An den Verbindungsbereichen können Befestigungsabschnitte vorgesehen sein, an denen die Verbindungsbereiche mittels Befestigungsmitteln verbunden werden können.

Aus DE 20 2013 010 457 U1 ist ein Bausatz für ein Hochbeet mit Ecken und Seitenwänden bekannt, bei dem die Seitenwände aus mehreren übereinander angeordneten Segmenten gebildet sind. Zwischen zwei Segmenten, also auf allen Höhen, auf denen jeweils Segmente aufeinander liegen, kann ein Einlegeboden eingebracht werden, so dass die Höhe des Einlegebodens nach Bedarf wählbar ist. Zudem werden Fülllatten oder Gitterböden vorgeschlagen, die zur Verkleinerung des Beetvolumens auf den Einlegeböden angeordnet werden können.

Aus EP 1 407 658 A1 ist ferner ein Hochbeet bekannt, bei dem in Eckpfeilern auf verschiedenen Höhen Löcher vorgesehen sind, in denen ein Einlegeboden befestigt werden kann.

Aus EP 2 976 938 A1 ist ein Hochbeet bekannt, das aus zwei hochstehenden plattenförmigen Wandelementen in Form eines Q aufgebaut ist. Die beiden Ω-förmigen Elemente sind jeweils über die gegenüberliegenden Abwinklungen mit einem weiteren gekrümmten plattenförmigen Wandelement verbunden. Das Hochbeet weist zudem Querstreben auf.

Aus EP 1 459 622 A1 ist weiterhin ein Gartenbeetzaun bekannt, der aus aus Seitenwandelementen gebildet ist. Die Seitenwandelemente bestehen aus Platten, deren nach oben gerichteter Wandbereich zu einem Kragen umgebogen ist. Im Kragen sind Durchbrüche angebracht, wodurch eine Sperre gegen das Eindringen von Schnecken erhalten wird.

Aus DE 40 01 089 A1 ist ferner ein Bauelementsatz zum Aufbau von vorzugsweise aus Holz oder Holzwerkstoff bestehenden Möbelstücken wie Regalen bekannt.

DE 20 2019 106290 U1 offenbart ein Hochbeet aus Kunststoff aufweisend mindestens eine Vorderwand, mindestens eine Rückwand, zwei Seitenwände, einen mittigen Stützrahmen und mindestens eine Bodenplatte, wobei die Elemente als Bauteile ausgebildet sind und jeweils durch Verbindungselemente miteinander verbunden sind, wobei alle Bauteile aus Kunststoff bestehen und wobei das Hochbeet mindestens vier Füße aufweist, die sich bevorzugt an den vier Ecken des Hochbeets befinden.

Aus DE 20 2009 009792 U1 ist ferner ein modularer Auflagerahmen zur Begrenzung eines Füllraumes auf einer Bodenfläche bekannt.

Es besteht ein ständiges Bedürfnis, Hochbeete möglichst stabil sowie einfach montierbar zu gestalten. Ferner ist es auch ein ständiges Bedürfnis, Hochbeete möglichst variabel in ihrem Aufbau zu gestalten, insbesondere mit höhenverstellbaren Einlegeböden.

Es ist die Aufgabe der Erfindung, Maßnahmen aufzuzeigen, die ein stabiles und einfach zu montierendes Hochbeet ermöglichen.

Die Lösung der Aufgabe erfolgt erfindungsgemäß durch ein Hochbeet mit den Merkmalen des Anspruchs 1 sowie durch ein Hochbeet mit den Merkmalen des Anspruchs 5.

Bevorzugte Ausgestaltungen der Erfindung sind in den Unteransprüchen und der nachfolgenden Beschreibung angegeben.

Eine Ausführungsform betrifft ein Hochbeet aufweisend zumindest eine sich in einer Hochrichtung und einer Längsrichtung erstreckende Seitenwand und mehrere sich in einer Querrichtung erstreckende Querstreben insbesondere zur Auflage von Einlegeböden, wobei die Seitenwand an Längsenden jeweils eine sich in der Hochrichtung und der Querrichtung erstreckende Abwinkelung zur Anlage an und Verbindung mit einer Abwinkelung einer benachbarten Seitenwand oder Abschlusswand aufweist, und wobei die Abwinkelungen über die Hochrichtung verteilt mehrere Ausnehmungen aufweisen und jeweils in zumindest einer Ausnehmung ein Aufnahmemittel zum Aufnehmen einer Querstrebe angeordnet ist, wobei eine an einem Aufnahmemittel angeordnete Querstrebe in der Hochrichtung auf dem Aufnahmemittel aufliegt und wobei die Querstrebe eine erste Ausnehmung zum Hintergreifen des Aufnahmemittels aufweist und mit der ersten Ausnehmung in der Querrichtung zumindest von der Seitenwand weg formschlüssig an dem Aufnahmemittel gehalten ist.

Eine Längsrichtung, eine Hochrichtung und eine Querrichtung definieren sich anhand einer üblichen Anordnung eines Hochbeets, bei der zumindest eine Seitenwand auf einem Untergrund aufgestellt wird und sich von dem Untergrund vertikal nach oben in der Hochrichtung erstreckt. Die beiden horizontalen Raumrichtungen sind dann eine Längsrichtung und eine Querrichtung, wobei die Längsrichtung anhand der Erstreckung der Seitenwand definiert wird. Mit der Wahl der Längsrichtung und der Querrichtung ist keine Relation zwischen der Erstreckung des gesamten Hochbeets in der Längs- und in der Querrichtung definiert. Das Hochbeet kann sich sowohl in der Längsrichtung länger als in der Querrichtung als auch in der Querrichtung länger als in der Längsrichtung erstrecken. Insofern die Begriffe oben und unten verwendet werden, ist bei einer üblichen Aufstellung des Hochbeets ein unten näher an einem Untergrund und ein oben dem Untergrund weiter abgewandt.

Insofern eine Erstreckung in einer Richtung oder in zwei Richtungen besteht, weist das betreffende Element in dieser Richtung bzw. diesen Richtungen eine funktionell relevante Erstreckung auf. So dient beispielsweise die Erstreckung der Seitenwand in der Hoch- und der Längsrichtung der Abgrenzung des Innenraums des Hochbeets gegenüber einem Außenraum. Dabei ist die Seitenwand insbesondere als dünnes Bauteil, etwa als Platte oder Blech, ausgebildet, das in der Querrichtung lediglich eine Dicke aufweist, die so gewählt ist, dass die Seitenwand in sich stabil ist. Die Erstreckung in der Querrichtung trägt dann nicht zur Zusammenwirkung der Seitenwand mit anderen Bauteilen oder zu einer anderen Funktion der Seitenwand bei. Insofern eine Erstreckung in einer Richtung definiert wird, ist dadurch jedoch nicht ausgeschlossen, dass sich das Bauteil auch in anderen Richtungen erstreckt und eine solche Erstreckung einer Funktion dient. So erstreckt sich eine Querstrebe beispielsweise in der Querrichtung insbesondere mit ihrer größten Dimension, kann sich aber auch, etwa zum Schaffen einer groß genügenden Auflagefläche für einen Einlegeboden, in der Längsrichtung erstrecken.

Soweit Elemente mit Hilfe einer Nummerierung bezeichnet sind, also beispielsweise "erstes Bauteil", "zweites Bauteil" und "drittes Bauteil", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass eine Vorrichtung nicht ein "erstes Bauteil" aufweisen muss, um ein "zweites Bauteil" aufweisen zu können. Auch kann die Vorrichtung ein "erstes Bauteil", sowie ein "drittes Bauteil" umfassen, ohne aber zwangsläufig ein "zweites Bauteil" aufzuweisen.

Das Hochbeet wird erfindungsgemäß aus zumindest einer Seitenwand gebildet, die mit Querstreben verbunden ist. Innerhalb der Seitenwand wird dabei ein Beet ausgebildet, dass mit Erde befüllt werden kann, wobei die Querstreben die Seitenwand gegen die Last durch die Erde in der Querrichtung halten. Das Beet kann, ohne dass ein Einlegeboden auf den Querstreben angeordnet wird, über die gesamte Höhe der Seitenwand ausgebildet werden, wobei die Querstreben dann nur zum Halten der Seitenwände dienen. Das Beet kann alternativ mit einem Einlegeboden auf den Querstreben nur über einen Teil der Höhe der Seitenwand ausgebildet werden. Durch die Anordnung mehrerer Ausnehmungen für Aufnahmemittel an Abwinkelungen der Seitenwand kann eine Querstrebe in mehreren Höhen an der Seitenwand angeordnet werden, um so mit einem auf der Querstrebe und einer weiteren Querstrebe aufliegenden Einlegeboden eine günstige Beettiefe für die geplante Bepflanzung wählen zu können. So kann beispielsweise für Pflanzen mit üblicherweise tiefwachsenden Wurzeln ein Paar aus Querstreben weit unten an der Seitenwand angeordnet werden, um mit einem auf den Querstreben aufliegenden Einlegeboden eine tiefes Beet zu schaffen. Für Pflanzen mit flach wachsenden Wurzeln kann ein Querstrebenpaar mit darauf aufliegendem Einlegeboden weiter oben angeordnet werden. Bei einem flachen Beet ist ferner das geringe Gewicht des Hochbeets durch die geringe Menge an eingefüllter Erde vorteilhaft, so dass es sich beispielsweise besonders zum Aufstellen auf einem Balkon oder einer Terrasse eignet und einen darunter nutzbaren Freiraum bereitstellt.

Durch das Hintergreifen des Aufnahmemittels durch die erste Ausnehmung der Querstrebe wirkt die Querstrebe unter Zuglast einem Ausbrechen der Seitenwand nach Außen, also von der Querstrebe weg, entgegen, so dass ein stabiles Hochbeet geschaffen ist. Eine solche Zuglast besteht insbesondere durch in dem Hochbeet eingefüllte Erde, die auf die Seitenwand drückt. Die Querstreben nehmen ferner auch Druck- und Biegelasten von den Einlegeböden auf. An den Abwinkelungen lässt sich durch deren Erstreckung in der Querrichtung besonders einfach ein Aufnahmemittel zum Hintergreifen durch die Querstrebe mit Formschluss in der Querrichtung anordnen, wobei das Aufnahmemittel bevorzugt eine Erstreckung in Längsrichtung aufweist.

Das Hochbeet kann aus einer einzelnen Seitenwand gebildet sein, die über zwei Querstreben gegen eine Wand wie etwa eine Hauswand abgestützt ist. Dabei sind Ausnehmungen für ein Aufnahmemittel bevorzugt bereits an einer einzelnen Abwinkelung so ausgebildet, dass eine Querstrebe auf einem in einer Ausnehmung angeordneten Aufnahmemittel aufliegen und dieses mit der ersten Ausnehmung hintergreifen kann. Das Hochbeet kann weiterhin aus zumindest zwei an Abwinkelungen miteinander verbundenen Seitenwänden gebildet sein, die beispielsweise über zwei oder bevorzugt drei Querstreben gegen eine Wand abgestützt sind. Dabei fluchten Ausnehmungen zweier aneinander anliegende Abwinkelungen miteinander und das Aufnahmemittel durchgreift Ausnehmungen beider Abwinkelungen, wobei ein in einer Ausnehmung angeordnetes Aufnahmemittel so ausgebildet ist, dass eine Querstrebe darauf aufliegen und dieses mit der ersten Ausnehmung hintergreifen kann. Bei den beiden vorgenannten Ausführungsformen können auf den Querstreben dann Einlegeböden aufliegen, von denen zumindest einzelne an Längsenden selbst Wandungen aufweisen und mit der Seitenwand und der weiteren Wand ein Beet bildet.

Bevorzugt ist das Hochbeet aus zumindest einer ersten Seitenwand und einer zweiten, der ersten Seitenwand gegenüberliegenden, Seitenwand gebildet. Wiederum mindestens zwei Querstreben verbinden dann die erste mit der zweiten Seitenwand und liegen besonders bevorzugt beidseitig an Aufnahmemitteln auf und hintergreifen diese mit ersten Ausnehmungen. Es ist dann ein freistehendes Hochbeet geschaffen, wobei zumindest einzelne Einlegeböden wiederum Wandungen an Längsenden aufweisen können. Ein solches Hochbeet kann auch mit wesentlich mehr als einer ersten Seitenwand und beispielsweise ebenso vielen zweiten Seitenwänden ausgebildet sein, wobei die Anzahl an Querstreben bevorzugt mindestens gleich der Anzahl an ersten Seitenwände plus eins ist. Besonders bevorzugt sind bei einem solchen freistehenden Hochbeet mit ersten und zweiten Seitenwänden zwei Abschlusswände vorgesehen, die an den in Längsrichtung vorderen und hinteren ersten und zweiten Seitenwänden anschließt und einen Wandabschnitt mit Erstreckung in Hoch- und Querrichtung bildet, das Hochbeet also kopfseitig abschließen und die Seitenwände als Querwand verbindet. Mit beidseitig vorgesehenen Abschlusswänden ist ein gänzlich umwandetes freistehendes Hochbeet geschaffen, bei dem Einlegeböden keine Wandungen mehr aufweisen müssen und auf mehreren Höhen angeordnet werden können, um mit den Seitenwänden und den Abschlusswänden ein Beet zu bilden. Ein Beet kann auch ohne Einlegeböden über die gesamte Höhe der geschlossenen Hülle aus Seitenwänden und Abschlusswänden ausgebildet sein.

Bevorzugt weist das Hochbeet also sich in der Querrichtung gegenüberliegende Seitenwände auf, wobei Querstreben zum Einsatz kommen können, die an beiden ihrer Enden eine erste Ausnehmung aufweist und mit der jeweiligen ersten Ausnehmung an Aufnahmemitteln der jeweiligen Seitenwände angeordnet ist. Weiterhin besonders bevorzugt weist das Hochbeet zumindest eine Abschlusswand auf, die zumindest einen ersten, bevorzugt zwei erste, sich in der Hochrichtung und der Längsrichtung erstreckenden Bereich mit einer daran angeordneten Abwinkelung und einen zweiten, sich in der Hochrichtung und der Querrichtung erstreckenden Bereich aufweist. Die Abschlusswand ist über die Abwinkelungen mit einer Seitenwand verbunden. Das Hochbeet bildet dann eine geschlossene Hülle und ist freistehend aufstellbar. Ein Einlegeboden oder je nach Anzahl der Seitenwände mehrere Einlegeböden können dabei jeweils in beliebiger Höhe angeordnet werden, wozu zu dem Einlegeböden zugehörige Querstrebenpaare auf einer entsprechenden Höhe an den Seitenwänden angeordnet werden.

In einer Ausführungsform sind zumindest zwei Querstrebenpaare in der Hochrichtung versetzt zueinander an den Seitenwänden angeordnet. Insofern auf den versetzt angeordneten Querstrebenpaaren aufliegenden Einlegeböden in der Längsrichtung benachbart zueinander sind, entsteht zwischen diesen eine Stufe. Bevorzugt ist die Hochflanke der Stufe dabei mittels einer Blende verschlossen, wobei sich die Blende dann in der Hoch- und der Querrichtung erstreckt. Es kann dann zwischen den Einlegeböden keine Erde hindurchfallen. Die Blende kann beispielsweise an einer in einer ersten Höhe angeordneten Querstrebe, die eine Auflagefläche für einen ersten Einlegeboden bildet, angeordnet sein und in einer über oder unter der Querstrebe liegenden Höhe eine Auflagefläche für einen weiteren Einlegeboden bilden, so, dass für den weiteren Einlegeboden keine weitere Querstrebe unmittelbar unter oder über der Querstrebe angeordnet werden muss. Der weitere Einlegeboden wird dann als auf der Querstrebe, die die Blende hält, aufliegend verstanden. Alternativ kann für den weiteren Einlegeboden eine separate Querstrebe unmittelbar unter oder über der ersten Querstrebe angeordnet sein, wobei die Blende bevorzugt an beiden Querstreben aufliegt.

Die Erfindung betrifft weiterhin ein Hochbeet aufweisend zwei Abschlusswände, die jeweils zwei erste, sich in der Hochrichtung und der Längsrichtung erstreckende Bereiche und einen zweiten, sich in der Hochrichtung und der Querrichtung erstreckenden Bereich aufweisen und eine sich in einer Querrichtung erstreckende Querstrebe zur Auflage eines Einlegebodens, wobei die ersten Bereiche der Abschlusswände an Längsenden jeweils eine sich in der Hochrichtung und der Querrichtung erstreckende Abwinkelung zur Anlage an und Verbindung mit den Abwinkelungen der anderen Abschlusswand aufweisen, und wobei die Abwinkelungen über die Hochrichtung verteilt mehrere Ausnehmungen aufweisen und jeweils in zumindest einer Ausnehmung ein Aufnahmemittel zum Aufnehmen der Querstrebe angeordnet ist, wobei die an den Aufnahmemitteln angeordnete Querstrebe in der Hochrichtung auf den Aufnahmemitteln aufliegt und wobei die Querstrebe an beiden ihrer Enden jeweils eine erste Ausnehmung zum Hintergreifen der Aufnahmemittel aufweist und jeweils mit der ersten Ausnehmung in der Querrichtung zumindest von dem ersten Bereich weg formschlüssig an dem Aufnahmemittel gehalten ist.

Das Hochbeet ist dann also aus zwei Abschlusswänden gebildet, die jeweils sich in Längsrichtung erstreckende Bereiche mit Abwinkelungen aufweisen. Die Seitenwände sind insofern an den Abschlusswänden integriert ausgebildet und die beiden Abschlusswände bilden zusammen einen umschlossenen Raum, in dem ein Beet ausgebildet werden kann. Dabei ist wiederum eine Querstrebe zur Querverspannung und als mögliche Auflage für einen Einlegeboden in einer wählbaren Höhe an den Abwinkelungen angeordnet.

Ein Einlegeboden ist üblicherweise als Rost, Gitter, Blech oder eine ähnliche Geometrie ausgebildet und erstreckt sich in der Längs- und der Querrichtung. An einem Einlegeboden können an Längs- und/oder Querenden weiterhin Abwinkelungen oder Wandungen vorgesehen sein. Auch können an Längs- oder Querenden Dichtungen vorgesehen sein. In einer Ausführungsform ohne Abschlusswände oder mit nur einer Abschlusswand können ferner an einem oder zwei Einlegeböden Wandelemente mit Erstreckung in der Hochrichtung vorgesehen sein, wobei diese Einlegeböden dann zur Platzierung an den Enden des Hochbeets vorgesehen sind.

Längsenden einer Seitenwand oder eines Bereichs einer Abschlusswand sind deren Enden in Längsrichtung, die eine in Hochrichtung verlaufende Kante bilden. Eine daran angeordnete Abwinkelung erstreckt sind in Hoch- und Querrichtung und bildet folglich mit der restlichen Seitenwand oder dem Abschusswandbereich einen rechten Winkel. Dabei ist eine Abwinkelung dazu vorgesehen, sich von der Seitenwand oder dem Abschlusswandbereich in einen Innenraum des Hochbeets zu erstrecken und ist vorteilhaft von außen nicht zu sehen. Zur Verbindung mit einer Abwinkelung einer benachbarten Seitenwand können Verbindungsmittel vorgesehen sein. Alternativ weisen die Abwinkelungen Hintergriffe auf, mit denen sie ineinander verhakt sind oder sind miteinander verklebt oder auf eine andere Weise verbunden. Zwischen zwei aneinander anliegenden Abwinkelungen können ferner Dichtungen angeordnet sein.

Insofern eine Querstrebe an einem Aufnahmemittel angeordnet ist, ist diese in ihre bei gänzlich montiertem Hochbeet vorgesehenen Position an dem Aufnahmemittel angebracht, liegt also gänzlich auf diesem auf und befindet sich mit der ersten Ausnehmung vollständig im Hintergriff mit dem Aufnahmemittel.

Bevorzugt ist die Querstrebe mit der ersten Ausnehmung in der Querrichtung auch zu der Seitenwand oder dem Abschlusswandbereich hin formschlüssig an dem Aufnahmemittel gehalten. Sie ist dann in der Querrichtung bereits bei der Anordnung an einer Abwinkelung mit einem ihrer Enden festgesetzt und kann zudem Zugkräfte und/oder Druckkräfte auf die Seitenwand übertragen. Das Hochbeet ist dann durch die Querstrebe sicher gegen ein Verformen von außen nach innen gesichert. Die Querstrebe ist in einer alternativen Ausführungsform in der Querrichtung zu der Seitenwand oder dem Abschlusswandbereich hin formschlüssig an der Seitenwand oder dem Abschlusswandbereich selbst gehalten, was zu den gleichen Vorteilen führt.

Bevorzugt liegt die Querstrebe mit der ersten Ausnehmung in der Hochrichtung auf dem Aufnahmemittel auf. Die erste Ausnehmung dient dann gleichzeitig dem Aufliegen in der Hochrichtung als auch dem Hintergriff zum formschlüssigen Halten, so, dass keine weitere Geometrie für eine der beide dieser Funktionen vorgesehen sein muss und sowohl die Querstrebe als auch das Aufnahmemittel besonders einfach gestaltet sein können.

Weiterhin bevorzugt erstrecken das Aufnahmemittel und eine daran angeordnete Querstrebe sich in der Längsrichtung beidseitig der Abwinkelung oder Abwinkelungen. Die Querstrebe umgibt dann die Abwinkelung oder Abwinkelungen und ist insbesondere symmetrisch an dieser oder diesen angeordnet. Das Aufnahmemittel kann dann momentfrei an der Abwinkelung oder den Abwinkelungen gehalten sein, wenn die Querstrebe dieses beidseitig gleichermaßen belastet, und somit besonders einfach ausgebildet sein. Eine an zwei miteinander verbundenen Seitenwänden angeordnete Querstrebe weist dabei besonders bevorzugt eine Auflagefläche für zwei Einlegeböden auf, die jeweils noch auf einer weiteren Querstrebe aufliegen können. Eine erste Auflagefläche erstreckt sich dann in einem sich in Längsrichtung erstreckenden Längsbereich einer ersten Seitenwand und eine zweite Auflagefläche in einem sich in Längsrichtung erstreckenden Längsbereich einer zweiten Seitenwand. Die beiden Auflageflächen liegen insbesondere auf einer gleichen Höhe und können bevorzugt gemeinsam eine durchgehende ebene Fläche bilden.

Die Querstrebe ist bevorzugt als ein U-Profil mit einem sich in der Längsrichtung und der Querrichtung erstreckenden Mittelschenkel und zwei sich in der Hochrichtung und der Querrichtung erstreckenden Seitenschenkeln ausgebildet. Auf diese Weise ist eine stabile Querstrebe geschaffen, die sowohl Zug- und Drucklasten in der Querrichtung als auch Biegelasten sicher aufnehmen kann. Der Mittelschenkel bildet dann eine Auflagefläche für einen Einlegeboden oder Auflageflächen für mehrere Einlegeböden. Besonders bevorzugt ist bei einer solchen Ausführungsform die erste Ausnehmung aus einer ersten Teilausnehmung an dem ersten Seitenschenkel und einer mit der ersten Teilausnehmung fluchtenden zweiten Teilausnehmung an dem zweiten Seitenschenkel gebildet. Die erste und die zweite Teilausnehmungen hintergreifen dann jeweils beidseitig der Abwinkelung oder Abwinkelungen ausgebildete Teile des Aufnahmemittels und liegen insbesondere auf diesen auf.

In einer besonders bevorzugten Ausführungsform weist die Querstrebe eine zweite Ausnehmung zum Umgreifen der Abwinkelung oder der aneinander anliegenden Abwinkelungen auf, wobei die Querstrebe mit der zweiten Ausnehmung in der Längsrichtung formschlüssig an der Abwinkelung oder den Abwinkelungen gehalten ist. Auf diese Weise ist die Querstrebe an der Abwinkelung oder den Abwinkelungen zentriert und torsionssicher gehalten. Weiterhin trägt eine solche zweite Ausnehmung zum Versteifen zweier aneinander anliegender Abwinkelungen und der Querstrebe bei, so dass ein besonders stabiles Hochbeet geschaffen wird. Durch die zweite Ausnehmung können auch umgriffene Abwinkelungen aneinander gedrückt und so miteinander verbunden werden. Dazu ist die zweite Ausnehmung besonders bevorzugt entsprechend dimensioniert, um eine Klemmung zwischen aneinander anliegenden Abwinkelungen zu erzeugen. Es sind dann vorteilhaft keine oder weniger anderweitige Mittel zum Verbinden der Abwinkelungen vorzusehen. Die zweite Ausnehmung ist bei einer vorbeschriebenen, als U-Profil ausgebildeten Querstrebe bevorzugt an dem Mittelschenkel ausgebildet.

Bevorzugt sind über die Hochrichtung verteilt mehrere Durchganglöcher als Ausnehmungen für das Aufnahmemittel an den Abwinkelungen vorgesehen. Solche Durchgangslöcher sind einfach an der Abwinkelung oder den Abwinkelungen ausbildbar und Aufnahmemittel können einfach an diesen angeordnet werden. Die Durchgangslöcher können ferner gleichzeitig zum Verbinden zweier aneinander anliegender Abwinkelungen mittels Verbindungsmittels wie etwa Schrauben genutzt werden, wobei dann Verbindungsmittel an Durchgangslöchern angeordnet werden, die nicht für Aufnahmemittel genutzt werden.

Das Aufnahmemittel ist bevorzugt ein Bolzen. Ein solcher Bolzen ist sehr einfach ausgebildet und eignet sich gut sowohl zum Hintergreifen durch die Querstrebe mit Formschluss in der Querrichtung als auch zum Auflegen der Querstrebe. Besonders einfach kann ein Bolzen an einer als Durchgangsloch ausgebildeten Ausnehmung an der Abwinkelung oder den Abwinkelungen werkzeugfrei angeordnet werden, indem er in bzw. durch ein solches geschoben wird und ist in diesem in der Hochrichtung gehalten. An dem Bolzen können ferner Mittel vorgesehen oder angeordnet sein, um diesen auch in der Längsrichtung an der Ausnehmung der Abwinkelung oder der Abwinkelungen zu halten. In einer weiteren Ausführungsform weist der Bolzen eine Nut oder Absätze auf und ist mit der zumindest einen Nut oder den Absätzen an der ersten Ausnehmung in der Längsrichtung festgelegt. Der Bolzen wird dann also in seiner Längsposition durch die Querstrebe gesichert und ist somit verliersicher in der Ausnehmung der Abwinkelung oder der Abwinkelungen gehalten. In allen beschriebenen Ausführungen sind der Bolzen und die Querstrebe besonders vorteilhaft werkzeugfrei und mit geringem Aufwand montierbar.

In einer Ausführungsform weist die erste Ausnehmung und/oder die zweite Ausnehmung eine trichterförmige Öffnung auf. Mittels einer solchen Öffnung ist das Einlegen der Querstrebe an dem Aufnahmemittel sowie der Abwinkelung oder den Abwinkelungen vereinfacht, da das Aufnahmemittel einfacher in die erste Ausnehmung und/oder die Abwinkelung bzw. die Abwinkelungen einfacher in die zweite Ausnehmung eingreifen können. Durch die trichterförmige Öffnungen werden die miteinander zusammenwirkenden Bauteile ferner zentriert, insofern sie vor einem Zusammenbau von ihrer gewünschten Lage abweichen.

Zwei aneinander anliegende Abwinkelungen benachbarter Seiten- oder Abschlusswände sind bevorzugt mittels Verbindungsmitteln, insbesondere mittels Schrauben, aneinander gehalten. Insbesondere sind über die Hochrichtung zwei oder mehr solche Verbindungsmittel angeordnet. Es kann ferner auch nur ein Verbindungsmittel angeordnet sein, während die zweite Ausnehmung wie vorbeschrieben ebenfalls zur Verbindung der Abwinkelungen beiträgt. Die Verbindungsmittel können neben Schrauben auch beliebige andere Verbindungmittel sein, insbesondere auch solche, die werkzeugfrei montierbar sind, wie beispielsweise Clips sowie Klemm- oder Schraubzwingen.

In einer Ausführungsform ist bzw. sind zumindest eine Seitenwand, zumindest eine Abschlusswand, zumindest eine Querstrebe und/oder zumindest ein Einlegeboden aus Stahl ausgebildet. So ist vorteilhaft ein besonders stabiles Hochbeet geschaffen. Insbesondere für die Querstrebe, die Zug-, Druck- und Biegelasten ausgesetzt ist, eignet sich ein Stahlwerkstoff mit einer hohen Festigkeit besonders. Weiterhin ist Stahl im Vergleich mit für Hochbeete oftmals genutztem Kunststoff besonders langlebig und weist selten sichtbare Alterungserscheinungen auf. Das Hochbeet ist also lange Zeit beispielsweise in einem Garten, einem Balkon und/oder Gartenterrasse nutzbar und bleibt dabei optisch ansprechend.

In einer weiteren Ausführungsform weist zumindest eine Seitenwand oder zumindest eine Abschlusswand eine abdeckbare Öffnung zum Zugang zu einem Bereich unterhalb einer Querstrebe, insbesondere mit darauf aufliegendem Einlegeboden, auf. Besonders dann, wenn die Querstrebe bzw. Querstreben recht weit oben angeordnet ist bzw. sind, ist darunter ein großer Raum geschaffen, der beispielsweise für ein Bewässerungs-, Heizungs- oder Beleuchtungssystem genutzt werden kann und dazu über die Öffnung zugänglich ist. Die Öffnung kann beispielsweise mittels einer Tür oder einer Schraubblende verdeckbar sein.

In noch einer weiteren Ausführungsform ist zumindest eine Seitenwand oder Abschlusswand zumindest bereichsweise gedämmt. Auf diese Weise bietet das Hochbeet einen Schutz für Pflanzen, deren Wurzeln vor tiefen Temperaturen oder vor Bodenfrost geschützt werden müssen.

Vorzugsweise ist mindestens eine Seitenwand versteift, beispielsweise durch Versteifungsrippen und/oder lokale Materialverdickungen. Dadurch kann ein Ausbeulen der Seitenwand bei einem besonders hohen angreifenden Gewicht vermieden werden. Dies ermöglicht es für das Hochbeet eine besonders große Höhe vorzusehen und mit einem vergleichsweise schweren Material zu füllen, ohne dass die unterste Seitenwand durch das abzustützende Gesamtgewicht ausbeult. Hierzu ist es bereits ausreichend, wenn lediglich die unterste Seitenwand versteift ist. Vorzugsweise sind sämtliche Seitenwände versteift, so dass für die Seitenwände Gleichteile verwendet werden können und Montagefehler vermeiden werden können.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: ein erfindungsgemäßes Hochbeet in perspektivischer Ansicht in einer ersten Ausführungsform,
- Fig. 2:: ein erfindungsgemäßes Hochbeet in perspektivischer Ansicht in einer zweiten Ausführungsform,
- Fig. 3:: eine Seitenwand in perspektivischer Ansicht,
- Fig. 4:: eine Abschlusswand in perspektivischer Ansicht,
- Fig. 5:: eine Detailansicht bei einem Hochbeet gemäß Fig. 2,
- Fig. 6:: eine Querstrebe in perspektivischer Ansicht,
- Fig. 7:: ein Aufnahmemittel in Form eines Bolzens in perspektivischer Ansicht,
- Fig. 8:: eine Schnittansicht bei einem Hochbeet gemäß Fig. 2 und Fig. 5,
- Fig. 9:: einen Einlegeboden in perspektivischer Ansicht,
- Fig. 10:: eine Blende in perspektivischer Ansicht.

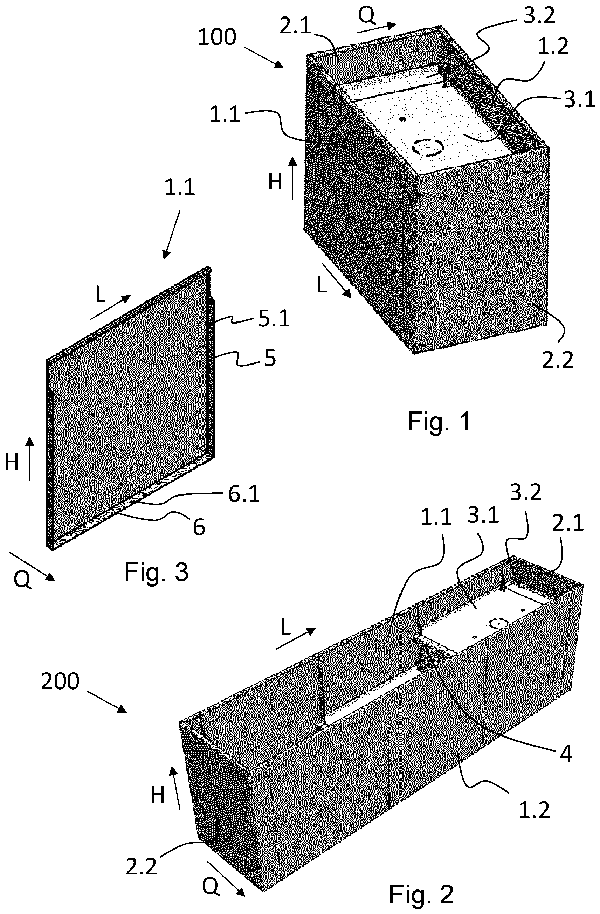

Fig. 1 zeigt ein Hochbeet 100 mit einer ersten Seitenwand 1.1 und einer zweiten Seitenwand 1.2, die sich in einer Hochrichtung H und einer Längsrichtung L erstrecken, sowie einer ersten Abschlusswand 2.1 und einer zweiten Abschlusswand 2.2, die sich in der Hochrichtung H und einer Querrichtung Q erstrecken. Die Seitenwände 1.1, 1.2 und die Abschlusswände 2.1, 2.2 bilden gemeinsam einen umschlossenen Raum. Innerhalb des umschlossenen Raums liegt ein Einlegeboden 3.1 sowie zwei Abschlussböden 3.2, von denen nur einer dargestellt ist, ein, die sich jeweils in der Längsrichtung L und der Querrichtung Q erstrecken. Oberhalb der Einlegeböden 3.1 ist ein Beet geschaffen, in dem Erde eingefüllt werden kann.

Fig. 2 zeigt ein Hochbeet 200 mit drei ersten Seitenwänden 1.1 und drei zweiten Seitenwänden 1.2, die sich in der Hochrichtung H und der Längsrichtung L erstrecken, sowie einer ersten Abschlusswand 2.1 und einer zweiten Abschlusswand 2.2, die sich in der Hochrichtung H und der Querrichtung Q erstrecken. Die Seitenwände 1.1, 1.2 und die Abschlusswände 2.1, 2.2 bilden gemeinsam einen umschlossenen Raum. Innerhalb des umschlossenen Raums liegen drei Einlegeböden 3.1 auf unterschiedlichen Höhen, von denen nur zwei dargestellt sind, und zwei Abschlussböden 3.2, von denen nur einer dargestellt ist, ein, die sich jeweils in der Längsrichtung L und der Querrichtung Q erstrecken. Zwischen zwei Einlegeböden 3.1 ist eine in der Hochrichtung H verlaufende Blende 4 angeordnet, die sich in der Hochrichtung H und der Querrichtung Q erstreckt. Oberhalb der Einlegeböden 3.1 ist ein Beet geschaffen, dessen Tiefe sich über die Längsrichtung L stufenweise verändert.

Die in Fig. 1 und Fig. 2 gezeigten Einlegeböden 3.1 liegen jeweils auf Querstreben, die an den Seitenwänden 1.1, 1.2 und den Abschlusswänden 2.1, 2.2 gehalten sind, auf, wie im Folgenden anhand von Darstellungen der einzelnen Bauteile der Hochbeete 100, 200 im Detail erläutert wird.

Fig. 3 zeigt eine erste Seitenwand 1.1, die auch einer zweiten Seitenwand 1.2 entspricht. Die erste Seitenwand 1.1 erstreckt sich in der Hochrichtung H und der Längsrichtung L und weist an Längsenden Abwinkelungen 5 auf, die sich in der Hochrichtung H und der Querrichtung Q erstrecken. An der Abwinkelung 5 sind über die Hochrichtung H verteilt mehrere als Durchgangslöcher ausgebildete Ausnehmungen 5.1 angeordnet, an denen Aufnahmemittel gehalten werden können und die ferner für Verbindungsmittel zum Verbinden der ersten Seitenwand 1.1 mit einer weiteren ersten Seitenwand 1.1 oder einer Abschlusswand 2.1, 2.2 dienen, wie in Fig. 1 und Fig. 2 gezeigt. Ferner weist die erste Seitenwand 1.1 an einer unteren Kante eine weitere Abwinkelung 6 auf, die als Standfläche auf einem Untergrund dient und eine Ausnehmung 6.1 beispielsweise für eine Verankerung in dem Untergrund aufweist.

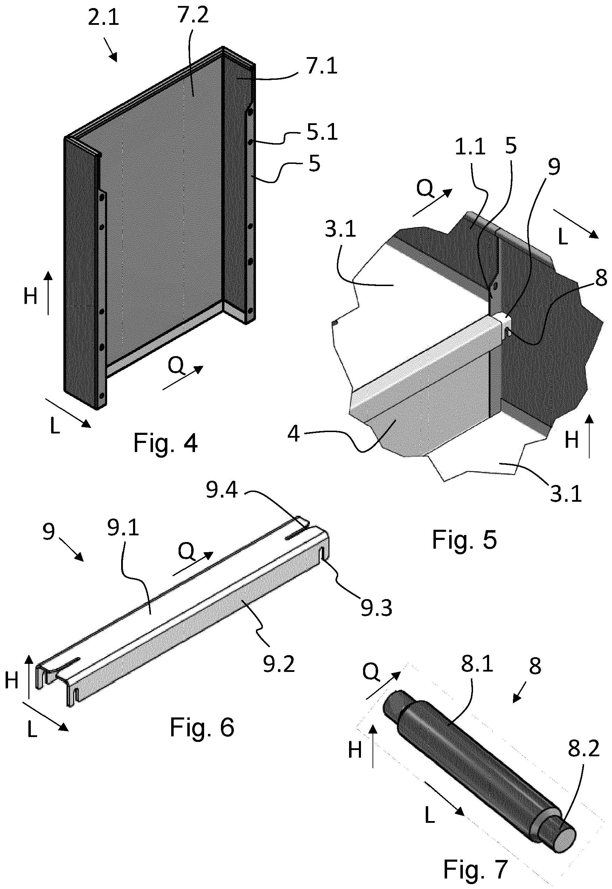

Fig. 4 zeigt eine erste Abschlusswand 2.1, die auch einer zweiten Abschlusswand 2.2 gespiegelt entspricht. Die Abschlusswand 2.1 weist zwei erste Bereiche 7.1, die sich in der Hochrichtung H und der Längsrichtung L erstrecken, und einen zweiten Bereich 7.2, der sich in der Hochrichtung H und der Querrichtung Q erstreckt, auf. An den ersten Bereichen 7.1 sind gleiche Abwinkelungen 5 mit Ausnehmungen 5.1 wie an der Seitenwand 1.1 vorgesehen, über die die Abschlusswand 2.1 gemäß Fig. 1 und Fig. 2 mit Seitenwänden 1.1, 1.2 verbindbar ist.

Fig. 5 zeigt eine Verbindungstelle zwischen zwei ersten Seitenwänden 1.1, wobei deren Abwinkelungen 5 aneinander anliegen. In zwei miteinander fluchtenden Ausnehmungen 5.1 der aneinander anliegenden Abwinkelungen 5 ist ein als Bolzen ausgeführtes Aufnahmemittel 8 angeordnet, auf dem eine Querstrebe 9 aufliegt. Oberhalb des Aufnahmemittels 8 sind an den Abwinkelungen 5 weitere miteinander fluchtende Ausnehmung 5.1 angeordnet, an denen eine Verschraubung der beiden Abwinkelungen 5 möglich ist. Auf der Querstrebe 9 liegt ein Einlegeboden 3.1 und eine Blende 4 auf, wobei die Blende 4 sich in der Hochrichtung H und der Querrichtung Q erstreckt und auf einer weiter unten angeordneten Ebene eine Auflagefläche für einen weiteren Einlegeboden 3.1 bildet.

Fig. 6 zeigt eine Querstrebe 9, die aus einem sich in der Längsrichtung L und der Querrichtung Q erstreckenden Mittelschenkel 9.1 und zwei daran anschließende Seitenschenkeln 9.2, die sich in der Hochrichtung H und der Querrichtung Q erstrecken, gebildet ist. An den Seitenschenkeln 9.2 sind jeweils Teilausnehmungen einer ersten Ausnehmung 9.3 angeordnet, die sich in der Hochrichtung H erstrecken und an einem unteren Ende eine Öffnung aufweisen. Die Querstrebe 9 weist weiterhin an dem Mittelschenkel 9.1 zweite Ausnehmungen 9.4 auf, die sich in der Querrichtung Q erstrecken und an äußeren Enden der Querstrebe 9 Öffnungen aufweisen. Die Öffnungen sind jeweils trichterförmig ausgeführt.

Fig. 7 zeigt ein Aufnahmemittel 8, das als Bolzen ausgeführt ist und einen mittleren Absatz 8.1 sowie zwei äußere Absätze 8.2 aufweist, wobei der mittlere Absatz 8.1 einen größeren Durchmesser als die äußeren Absätze aufweist.

Aus der Zusammenschau der Fig. 5, 6 und 7 ergibt sich im Detail, dass in Fig. 5 das Aufnahmemittel 8 in einer Ausnehmung 5.1 an den aneinander anliegenden Abwinkelungen 5 eingeschoben ist und die Querstrebe 9 mit den ersten Ausnehmungen 9.3 auf dem Aufnahmemittel 8 aufliegt. Dabei hintergreifen die ersten Ausnehmungen 9.3 das Aufnahmemittel 8, so, dass die Querstrebe 9 in der Querrichtung Q an diesem festgelegt ist. Weiterhin der der Durchmesser des ersten Absatzes 8.1 des Aufnahmemittels 8 größer als die erste Ausnehmung 9.3 breit ist, so, dass das Aufnahmemittel 8 mit Kanten zwischen dem mittleren Absatz 8.1 und äußeren Absätzen 8.2 an der Innenseite der Querstrebe 9 anliegt und damit in der Längsrichtung L an der Querstrebe 9 gehalten ist. Sobald also die Querstrebe 9 auf dem Aufnahmemittel 8 aufliegt, ist dieses gegen ein Herausrutschen aus den Ausnehmungen 5.1 gesichert. Die Querstrebe 9 umgreift weiterhin mit der zweiten Ausnehmung 9.4 die aneinander anliegenden Abwinkelungen 5, so, dass die Querstrebe 9 in der Längsrichtung L einen Formschluss mit den Abwinkelungen 5 bildet und damit in der Längsrichtung L festgelegt ist.

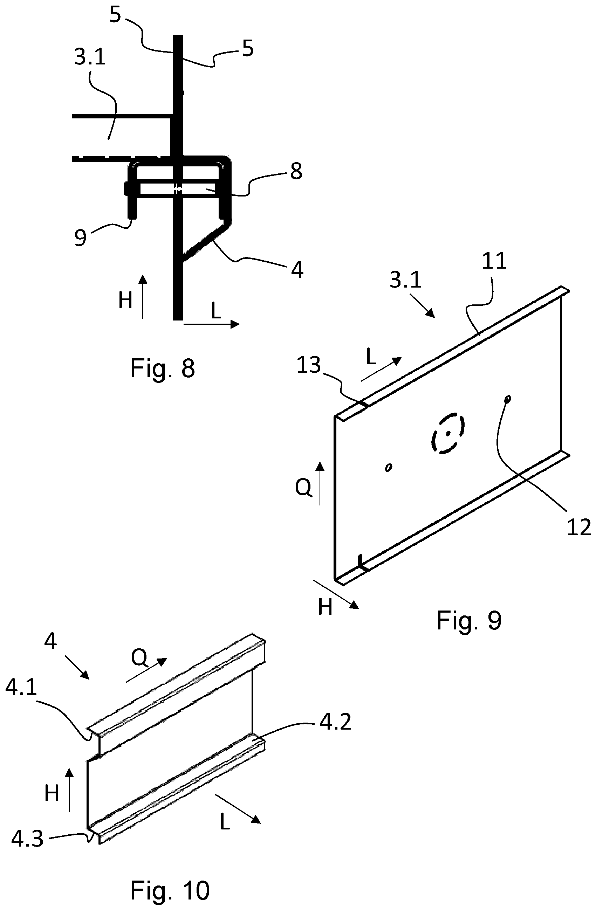

Fig. 8 zeigt die Anordnung zwischen Abwinkelungen 5, Aufnahmemittel 8 und Querstrebe 9 im Schnitt. Die Querstrebe 9 liegt auf dem Aufnahmemittel 8 beidseitig der Abwinkelungen 5 und somit momentenfrei auf. Gleichzeitig ist das Aufnahmemittel 8 an der Querstrebe 9 in Längsrichtung L gehalten.

Fig. 9 zeigt einen Einlegeboden 3.1. An dem Einlegeboden 3.1 sind an Querenden Abwinkelungen 11 angeordnet. Weiterhin weist der Einlegeboden 3.1 Ausnehmungen 12 auf, die beispielsweise dem Ablauf von Stauwasser oder der Belüftung der Beete dienen. Weiterhin sind an Querenden Ausnehmungen 13 vorgesehen, die sich durch die Abwinkelungen 11 erstrecken und zum Eingriff von Abwinkelungen 5 der Abschlusswände 2.1, 2.2 dienen.

Fig. 10 zeigt eine Blende 4, die eine erste Auflagefläche 4.1 zum Aufliegen auf einer Querstrebe 9 aufweist. Auf einer gegenüber der ersten Auflagefläche 4.1 höhenversetzten Ebene weist die Blende 4 eine zweite Auflagefläche 4.2 für einen Einlegeboden 3.1 auf. Mit einer dritten Auflagefläche 4.3 kann die Blende 4 ferner auf einer weiteren Querstrebe 9 aufliegen.

### Bezugszeichenliste

- 1.1: erste Seitenwand
- 1.2: zweite Seitenwand
- 2.1: erste Abschlusswand
- 2.2: zweite Abschlusswand
- 3.1: Einlegeboden
- 3.2: Abschlussboden
- 4: Blende
- 4.1: Auflagefläche der Blende
- 4.2: Auflagefläche der Blende
- 4.3: Auflagefläche der Blende
- 5: Abwinkelung
- 5.1: Ausnehmung
- 6: Abwinkelung
- 6.1: Ausnehmung
- 7.1: erster Bereich der Abschlusswand
- 7.2: zweiter Bereich der Abschlusswand
- 8: Aufnahmemittel
- 8.1: erster Absatz des Aufnahmemittels
- 8.2: zweiter Absatz des Aufnahmemittels
- 9: Querstrebe
- 9.1: Mittelschenkel der Querstrebe
- 9.2: Seitenschenkel der Querstrebe
- 9.3: erste Ausnehmung der Querstrebe
- 9.4: zweite Ausnehmung der Querstrebe
- 11: Abwinkelung
- 12: Ausnehmung
- 13: Ausnehmung
- 100: Hochbeet
- 200: Hochbeet
- H: Hochrichtung
- L: Längsrichtung
- Q: Querrichtung

## Patentansprüche

1. Hochbeet (100, 200) aufweisend zumindest eine sich in einer Hochrichtung (H) und einer Längsrichtung (L) erstreckende Seitenwand (1.1, 1.2) und mehrere sich in einer Querrichtung (Q) erstreckende Querstreben (9) insbesondere zur Auflage von Einlegeböden (3.1),
wobei die Seitenwand (1.1, 1.2) an Längsenden jeweils eine sich in der Hochrichtung (H) und der Querrichtung (Q) erstreckende Abwinkelung (5) zur Anlage an und Verbindung mit einer Abwinkelung (5) einer benachbarten Seitenwand (1.1, 1.2) oder Abschlusswand (2.1, 2.2) aufweist, und
wobei die Abwinkelungen (5) über die Hochrichtung (H) verteilt mehrere Ausnehmungen (5.1) aufweisen und jeweils in zumindest einer Ausnehmung (5.1) ein Aufnahmemittel (8) zum Aufnehmen einer Querstrebe (9) angeordnet ist,
**dadurch gekennzeichnet, dass** eine an einem Aufnahmemittel (8) angeordnete Querstrebe (9) in der Hochrichtung (H) auf dem Aufnahmemittel (8) aufliegt und,
dass die Querstrebe (9) eine erste Ausnehmung (9.3) zum Hintergreifen des Aufnahmemittels (8) aufweist und mit der ersten Ausnehmung (9.3) in der Querrichtung (Q) zumindest von der Seitenwand (1.1, 1.2) weg formschlüssig an dem Aufnahmemittel (8) gehalten ist.

2. Hochbeet (100, 200) nach Anspruch 1, **gekennzeichnet durch** sich in der Querrichtung (Q) gegenüberliegende Seitenwände (1.1, 1.2), wobei mindestens eine Querstrebe (9) an beiden ihrer Enden eine erste Ausnehmung (9.3) aufweist und mit der jeweiligen ersten Ausnehmung (9.3) an Aufnahmemitteln (8) der jeweiligen Seitenwände (1.1, 1.2) angeordnet ist.

3. Hochbeet (100, 200) nach Anspruch 1 oder 2, **gekennzeichnet durch** zumindest eine Abschlusswand (2.1, 2.2), die zumindest einen ersten, sich in der Hochrichtung (H) und der Längsrichtung (L) erstreckenden Bereich (7.1) mit einer daran angeordneten Abwinkelung (5) und einen zweiten, sich in der Hochrichtung (H) und der Querrichtung (Q) erstreckenden Bereich (7.2) aufweist.

4. Hochbeet (100, 200) nach einem der vorhergehenden Ansprüche, **dadurch gekennzeichnet, dass** zumindest zwei Querstrebenpaare in der Hochrichtung (H) versetzt zueinander an den Seitenwänden (1.1, 1.2) angeordnet sind.

5. Hochbeet (100, 200) aufweisend zwei Abschlusswände (2.1, 2.2), die jeweils zwei erste, sich in der Hochrichtung (H) und der Längsrichtung (L) erstreckenden Bereich (7.1) und einen zweiten, sich in der Hochrichtung (H) und der Querrichtung (Q) erstreckenden Bereich (7.2) aufweisen und mindestens eine sich in einer Querrichtung (Q) erstreckende Querstrebe (9) zur Auflage eines Einlegebodens (3.1),
wobei die ersten Bereiche (7.1) der Abschlusswände (2.1, 2.2) an Längsenden jeweils eine sich in der Hochrichtung (H) und der Querrichtung (Q) erstreckende Abwinkelung (5) zur Anlage an und Verbindung mit den Abwinkelungen (5) der anderen Abschlusswand (2.1, 2.2) aufweisen, und
wobei die Abwinkelungen (5) über die Hochrichtung (H) verteilt mehrere Ausnehmungen (5.1) aufweisen und jeweils in zumindest einer Ausnehmung (5.1) ein Aufnahmemittel (8) zum Aufnehmen einer Querstrebe (9) angeordnet ist,
**dadurch gekennzeichnet, dass** die an den Aufnahmemitteln (8) angeordnete Querstrebe (9) in der Hochrichtung (H) auf den Aufnahmemitteln (8) aufliegt und,
dass die Querstrebe (9) an beiden ihrer Enden jeweils eine erste Ausnehmung (9.3) zum Hintergreifen der Aufnahmemittel (8) aufweist und jeweils mit der ersten Ausnehmung (9.3) in der Querrichtung (Q) zumindest von dem ersten Bereich (7.1) weg formschlüssig an dem Aufnahmemittel (8) gehalten ist.

6. Hochbeet (100, 200) nach einem der vorhergehenden Ansprüche, **dadurch gekennzeichnet, dass** Ausnehmungen (5.1) zweier aneinander anliegende Abwinkelungen (5) miteinander fluchten und das Aufnahmemittel (8) Ausnehmungen (5.1) beider Abwinkelungen (5) durchgreift.

7. Hochbeet (100, 200) nach einem der vorhergehenden Ansprüche, **dadurch gekennzeichnet, dass** die Querstrebe (9) mit der ersten Ausnehmung (9.3) in der Hochrichtung (H) auf dem Aufnahmemittel (8) aufliegt.

8. Hochbeet (100, 200) nach einem der vorhergehenden Ansprüche, **dadurch gekennzeichnet, dass** das Aufnahmemittel (8) und eine daran angeordnete Querstrebe (9) sich in der Längsrichtung (L) beidseitig der Abwinkelung (5) oder Abwinkelungen (5) erstrecken.

9. Hochbeet (100, 200) nach einem der vorhergehenden Ansprüche, **dadurch gekennzeichnet, dass** die Querstrebe (9) eine zweite Ausnehmung (9.4) zum Umgreifen der Abwinkelung (5) oder der aneinander anliegenden Abwinkelungen (5) aufweist, wobei die Querstrebe (9) mit der zweiten Ausnehmung (9.4) in der Längsrichtung (L) formschlüssig an der Abwinkelung (5) oder den Abwinkelungen (5) gehalten ist.

10. Hochbeet (100, 200) nach einem der vorhergehenden Ansprüche, **dadurch gekennzeichnet, dass** über die Hochrichtung (H) verteilt mehrere Durchganglöcher als Ausnehmungen (5.1) für das Aufnahmemittel (8) an den Abwinkelungen (5) vorgesehen sind.

11. Hochbeet (100, 200) nach einem der vorhergehenden Ansprüche, **dadurch gekennzeichnet, dass** das Aufnahmemittel (8) ein Bolzen ist.

12. Hochbeet (100, 200) nach Anspruch 10 und 11, **dadurch gekennzeichnet, dass** der Bolzen ein Durchgangsloch durchgreift und zumindest eine Nut oder Absätze (8.1, 8.2) aufweist und mit der zumindest einen Nut oder den Absätzen (8.1, 8.2) an der ersten Ausnehmung (9.3) der Querstrebe (9) in der Längsrichtung (L) festgelegt ist.

13. Hochbeet (100, 200) nach einem der vorhergehenden Ansprüche, **dadurch gekennzeichnet, dass** auf zumindest einer Querstrebe oder einem Querstrebenpaar ein Einlegeboden (3.1) aufliegt.

14. Hochbeet (100, 200) nach einem der vorhergehenden Ansprüche, **dadurch gekennzeichnet, dass** zumindest eine Seitenwand (1.1, 1.2), zumindest eine Abschlusswand (2.1, 2.2), zumindest eine Querstrebe (9) und/oder zumindest ein Einlegeboden (3.1) aus Stahl ausgebildet ist.

15. Hochbeet (100, 200) nach einem der vorhergehenden Ansprüche, **dadurch gekennzeichnet, dass** zumindest eine Seitenwand (1.1, 1.2) oder zumindest eine Abschlusswand (2.1, 2.2) eine abdeckbare Öffnung zum Zugang zu einem Bereich unterhalb einer Querstrebe (9) aufweist.

## Claims

1. Raised bed (100, 200) comprising at least one side wall (1.1, 1.2) extending in an upward direction (H) and a longitudinal direction (L) and a plurality of transverse struts (9) extending in a transverse direction (Q), in particular for supporting shelves (3.1),
wherein the side wall (1.1, 1.2) comprises at longitudinal ends respectively an angled portion (5) extending in the upward direction (H) and the transverse direction (Q) for abutment against and connection with an angled portion (5) of an adjacent side wall (1.1, 1.2) or end wall (2.1, 2.2), and
wherein the angled portions (5) have a plurality of recesses (5.1) distributed over the upward direction (H), and wherein receiving means (8) for receiving a transverse strut (9) is respectively arranged in at least one recess (5.1),
**characterized in that** a transverse strut (9) arranged at a receiving means (8) rests on the receiving means (8) in the upward direction (H), and
**in that** the transverse strut (9) comprises a first recess (9.3) for engaging behind the receiving means (8) and is held with the first recess (9.3) in the transverse direction (Q) at the receiving means (8) in a form-fitting manner at least away from the side wall (1.1, 1.2).

2. Raised bed (100, 200) according to claim 1, **characterized by** side walls (1.1, 1.2) disposed opposite to one another in the transverse direction (Q), wherein at least one transverse strut (9) comprises a first recess (9.3) at both of its ends and is arranged with the respective first recess (9.3) at receiving means (8) of the respective side walls (1.1, 1.2).

3. Raised bed (100, 200) according to claim 1 or 2, **characterized by** at least one end wall (2.1, 2.2) which comprise at least one first region (7.1) extending in the upward direction (H) and in the longitudinal direction (L) with an angled portion (5) arranged thereon, and a second region (7.2) extending in the upward direction (H) and the transverse direction (Q).

4. Raised bed (100, 200) according to any one of the preceding claims, **characterized in that** at least two pairs of transverse struts are arranged at the side walls (1.1, 1.2) offset relative to one another in the upward direction (H).

5. Raised bed (100, 200) comprising two end walls (2.1, 2.2), each respectively comprising two first regions (7.1) extending in the upward direction (H) and the longitudinal direction (L) and a second region (7.2) extending in the upward direction (H) and the transverse direction (Q) and at least one transverse strut (9) extending in a transverse direction (Q) for supporting a shelf (3.1),
wherein the first regions (7.1) of the end walls (2.1, 2.2) each comprise at longitudinal ends an angled portion (5) extending in the upward direction (H) and the transverse direction (Q) for abutment against and connection to the angled portions (5) of the other end wall (2.1, 2.2), and
wherein the angled portions (5) have a plurality of recesses (5.1) distributed over the upward direction (H) and receiving means (8) for receiving a transverse strut (9) are respectively arranged in at least one recess (5.1),
**characterized in that** the transverse strut (9) arranged at the receiving means (8) rests on the receiving means (8) in the upward direction (H), and
**in that** the transverse strut (9) has, at both of its ends, respectively a first recess (9.3) for engaging behind the receiving means (8) and is held respectively with the first recess (9.3) in the transverse direction (Q) at least away from the first region (7.1) in a form-fitting manner at the receiving means (8).

6. Raised bed (100, 200) according to any one of the preceding claims, **characterized in that** recesses (5.1) of two adjacent angled portions (5) are aligned with one another and the receiving means (8) extends through recesses (5.1) of both angled portions (5).

7. Raised bed (100, 200) according to any one of the preceding claims, **characterized in that** the transverse strut (9) rests with the first recess (9.3) in the upward direction (H) on the receiving means (8).

8. Raised bed (100, 200) according to any one of the preceding claims, **characterized in that** the receiving means (8) and a cross strut (9) arranged thereon extend in the longitudinal direction (L) on both sides of the angled portion (5) or angled portions (5).

9. Raised bed (100, 200) according to any one of the preceding claims, **characterized in that** the transverse strut (9) comprises a second recess (9.4) for engaging around the angled portion (5) or angled portions (5) abutting each other, wherein the transverse strut (9) is held with the second recess (9.4) in the longitudinal direction (L) in a form-fitting manner at the angled portion (5) or angled portions (5).

10. Raised bed (100, 200) according to any one of the preceding claims, **characterized in that** a plurality of through holes distributed over the upward direction (H) are provided as recesses (5.1) for the receiving means (8) at the angled portions (5).

11. Raised bed (100, 200) according to any one of the preceding claims, **characterized in that** the receiving means (8) is a bolt.

12. Raised bed (100, 200) according to claim 10 and 11, **characterized in that** the bolt extends through a through hole and comprises at least one groove or shoulders (8.1, 8.2) and is fixed with the at least one groove or the shoulders (8.1, 8.2) to the first recess (9.3) of the transverse strut (9) in the longitudinal direction (L).

13. Raised bed (100, 200) according to any one of the preceding claims, **characterized in that** a shelf (3.1) rests on at least one transverse strut or pair of transverse struts.

14. Raised bed (100, 200) according to any one of the preceding claims, **characterized in that** at least one side wall (1.1, 1.2), at least one end wall (2.1, 2.2), at least one transverse strut (9) and/or at least one shelf (3.1) is made of steel.

15. Raised bed (100, 200) according to any one of the preceding claims, **characterized in that** at least one side wall (1.1, 1.2) or at least one end wall (2.1, 2.2) comprises a coverable opening for access to an area below a transverse strut (9).

## Revendications

1. Plate-bande surélevée (100, 200) présentant au moins une paroi latérale (1.1, 1.2) s'étendant dans une direction vers le haut (H) et une direction longitudinale (L) et plusieurs montants transversaux (9) s'étendant dans une direction transversale (Q), en particulier prévus pour la mise en place de tablettes (3.1),
dans laquelle la paroi latérale (1.1, 1.2) présente aux extrémités longitudinales respectivement un coude (5) s'étendant dans la direction vers le haut (H) et dans la direction transversale (Q) pour la mise en place et la liaison avec une paroi latérale (1.1, 1.2) au voisinage d'un coude (5) ou d'une paroi de finition (2.1, 2.2), et
dans laquelle les coudes (5) présentent plusieurs évidements (5.1) distribués dans la direction vers le haut (H) et respectivement un moyen de réception (8) est disposé dans au moins un évidement (5.1) permettant la réception d'un montant transversal (9),
**caractérisée en ce qu'**un montant transversal (9) disposé sur un moyen de réception (8) dans la direction vers le haut (H) repose sur le moyen de réception (8), et
que le montant transversal (9) présente un premier évidement (9.3) pour la mise en prise du moyen de réception (8) et est maintenu avec le premier évidement (9.3) dans la direction transversale (Q) au moins à partir de la paroi latérale (1.1, 1.2) par complémentarité des formes sur le moyen de réception (8).

2. Plate-bande surélevée (100, 200) selon la revendication 1, **caractérisée par** des parois latérales (1.1, 1.2) situées à l'opposé dans la direction transversale (Q), où au moins un montant transversal (9) présente un premier évidement (9.3) à ses deux extrémités et est disposé avec le premier évidement (9.3) respectif sur des moyens de réception (8) des parois latérales (1.1, 1.2) respectives.

3. Plate-bande surélevée (100, 200) selon la revendication 1 ou la revendication 2, **caractérisée par** au moins une paroi de finition (2.1, 2.2) qui présente au moins une première zone (7.1) s'étendant dans la direction vers le haut (H) et dans la direction longitudinale (L) avec un coude (5) y étant disposé et une deuxième zone (7.2) s'étendant dans la direction vers le haut (H) et dans la direction transversale (Q).

4. Plate-bande surélevée (100, 200) selon l'une des revendications précédentes, **caractérisée en ce qu'**au moins deux paires de montants transversaux sont disposées décalées l'une par rapport à l'autre dans la direction vers le haut (H) sur les parois latérales (1.1, 1.2).

5. Plate-bande surélevée (100, 200) présentant deux parois de finition (2.1, 2.2) qui présentent respectivement deux premières zones (7.1) s'étendant dans la direction vers le haut (H) et dans la direction longitudinale (L) et une deuxième zone (7.2) s'étendant dans la direction vers le haut (H) et dans la direction transversale (Q) et au moins un montant transversal (9) s'étendant dans une direction transversale (Q) pour l'appui d'une tablette (3.1),
dans laquelle les premières zones (7.1) des parois de finition (2.1, 2.2) présentent aux extrémités longitudinales respectivement un coude (5) s'étendant dans la direction vers le haut (H) et dans la direction transversale (Q) pour l'appui et la liaison avec les coudes (5) de l'autre paroi de finition (2.1, 2.2), et
dans laquelle les coudes (5) présentent plusieurs évidements (5.1) distribués sur la direction vers le haut (H) et un moyen de réception (8) est respectivement disposé dans au moins un évidement (5.1) pour la réception d'un montant transversal (9),
**caractérisée en ce que** le montant transversal (9) disposé sur les moyens de réception (8) dans la direction vers le haut (H) repose sur les moyens de réception (8), et
que le montant transversal (9) présente à ses deux extrémités respectivement un premier évidement (9.3) pour la mise en prise des moyens de réception (8) et est maintenu par complémentarité des formes respectivement avec le premier évidement (9.3) dans la direction transversale (Q) au moins à partir de la première zone (7.1) sur le moyen de réception (8).

6. Plate-bande surélevée (100, 200) selon l'une des revendications précédentes, **caractérisée en ce que** des évidements (5.1) de deux coudes (5) adjacents l'un à l'autre sont alignés et le moyen de réception (8) met en prise des évidements (5.1) des deux coudes (5).

7. Plate-bande surélevée (100, 200) selon l'une des revendications précédentes, **caractérisée en ce que** le montant transversal (9) repose sur le moyen de réception (8) avec le premier évidement (9.3) dans la direction vers le haut (H).

8. Plate-bande surélevée (100, 200) selon l'une des revendications précédentes, **caractérisée en ce que** le moyen de réception (8) et un montant transversal (9) y étant disposé s'étendent dans la direction longitudinale (L) des deux côtés du coude (5) ou des coudes (5).

9. Plate-bande surélevée (100, 200) selon l'une des revendications précédentes, **caractérisée en ce que** le montant transversal (9) présente un deuxième évidement (9.4) pour la prise avec le coude (5) ou des coudes (5) adjacents les uns aux autres, où le montant transversal (9) est maintenu avec le deuxième évidement (9.4) dans la direction longitudinale (L) de manière complémentaire par les formes sur le coude (5) ou les coudes (5).

10. Plate-bande surélevée (100, 200) selon l'une des revendications précédentes, **caractérisée en ce que** plusieurs alésages distribués dans la direction vers le haut (H) sont prévus pour servir d'évidements (5.1) pour le moyen de réception (8) sur les coudes (5).

11. Plate-bande surélevée (100, 200) selon l'une des revendications précédentes, **caractérisée en ce que** le moyen de réception (8) est un boulon.

12. Plate-bande surélevée (100, 200) selon la revendication 10 et la revendication 11, **caractérisée en ce que** le boulon traverse un alésage et présente au moins une rainure ou des dénivelés (8.1, 8.2) et est fixé sur le premier évidement (9.3) du montant transversal (9) dans la direction longitudinale (L) avec l'au moins une rainure ou les dénivelés (8.1, 8.2).

13. Plate-bande surélevée (100, 200) selon l'une des revendications précédentes, **caractérisée en ce qu'**une tablette (3.1) repose sur au moins un montant transversal ou sur une paire de montants transversaux.

14. Plate-bande surélevée (100, 200) selon l'une des revendications précédentes, **caractérisée en ce qu'**au moins une paroi latérale (1.1, 1.2), qu'au moins une paroi de finition (2.1, 2.2), qu'au moins un montant transversal (9), et/ou au moins une tablette (3.1), est conçu(e) en acier.

15. Plate-bande surélevée (100, 200) selon l'une des revendications précédentes, **caractérisée en ce qu'**au moins une paroi latérale (1.1, 1.2) ou qu'au moins une paroi de finition (2.1, 2.2) présente un orifice pouvant être découvert pour l'accès vers une zone en-dessous d'un montant transversal (9).
